# EUROPÄISCHE PATENTSCHRIFT

(11) **EP 4 025 840 B1**
(45) Veröffentlichungstag und Bekanntmachung des Hinweises auf die Patenterteilung: **17.01.2024**
(21) Anmeldenummer: 20775195.9
(22) Anmeldetag: 07.09.2020
(51) Int. Cl.: F24F 5/00, F24F 11/34, F24F 13/30, F24F 13/20

(54) **WÄRMETAUSCHERANORDNUNG ZUR BEFESTIGUNG AN EINER GERÄTEWAND**
HEAT EXCHANGER ARRANGEMENT FOR FIXATION TO A WALL OF A DEVICE
ARRANGEMENT D'ÉCHANGEUR DE CHALEUR

(30) Priorität: 06.09.2019 DE 102019124005
(43) Veröffentlichungstag der Anmeldung: 13.07.2022
(73) Patentinhaber: Andreas Hettich GmbH & Co KG, 78532 Tuttlingen (DE)
(72) Erfinder: EBERLE, Klaus-Guenter, 78532 Tuttlingen (DE); GEHRING, Frank Karl, 72364 Obernheim (DE)
(74) Vertreter: Puschmann Borchert Kaiser Klettner Patentanwälte Partnerschaft mbB
(86) Internationale Anmeldenummer: PCT/EP2020/074956
(87) Internationale Veröffentlichungsnummer: WO 2021/044057

(56) Entgegenhaltungen:
- EP-A1- 1 489 894
- US-A1- 2004 211 553
- US-A1- 2014 190 198

## Beschreibung

Die Erfindung betrifft eine Wärmetauscheranordnung zur Befestigung an einer Gerätewand.

Es ist bekannt, dass das Raumklima durch den Temperatureintrag von in einem Raum befindlichen Geräten, insbesondere punktuell, belastet wird.

Aus der DE 20 2016 105 077 U1 ist eine Wärmetauscheranordnung für Geräte, insbesondere Laborgeräte, bekannt. Gemäß dieser Druckschrift werden Wärmetauscher über einen Schlauch mit einem Abluftbereich eines Laborgeräts verbunden, um die so in den Raum eingeführte Abluft zu kühlen. Eine ähnliche Ausgestaltung ist auch aus der DE 41 11 333 A1 bekannt, bei der die Abluft eines Geräts über ein Kanalsystem abgeführt wird, und, nachdem diese abgekühlt wurde, wieder in den Raum eingeleitet wird.

Die gattungsgemäße EP 1 489 894 A1 offenbart eine Wärmetauscheranordnung zur Befestigung an einer Gerätewand mit einem Gehäuse. Im Gehäuse ist ein Hauptströmungsweg gebildet, indem ein Flüssigkeitswärmetauscher angeordnet ist. Ferner ist im Hauptströmungsweg ein Luftförderer angeordnet, der den Luftstrom über den Flüssigkeitswärmetauscher führt. Dabei sind mehrere Betriebsmodi einer Wärmetauscheranordnung zur Kühlung vorgesehen. Unter anderem wird ein Kältemittel-Kühlmodus und eine freie Kühlung über Außenluft vorgeschlagen.

In der US 2004/211553 A1 ist eine Wärmetauscheranordnung mit Gebläse, zwei Wärmetauschern und einer Bypassklappe offenbart. Die Bypassklappe ist dazu vorgesehen, Luft am Wärmetauscher vorbei oder alternativ Luft in den Wärmetauscher zu führen. Dabei erfolgt die Öffnung des Bypassströmungswegs hinter dem Gebläse.

Aus der US 2014/190198 A1 ist eine weitere Wärmetauscheanordnung mit Bypassklappe bekannt.

Es ist Aufgabe der Erfindung eine kompakte und insbesondere einfach nachrüstbare Wärmetauscheranordnung anzugeben, damit die aus dem Gerät, insbesondere einem Laborgerät, austretende warme Abluft die Raumluft nicht temperaturbelastet, wobei auch bei Ausfall des Luftförderers gewährleistet ist, dass die Abluft des Geräts sicher in den Raum abgeleitet wird.

Die Aufgabe wird durch die Merkmale des Anspruchs 1 gelöst.

Die Unteransprüche bilden vorteilhafte Weiterbildungen der Erfindung.

Erfindungsgemäß umfasst die Wärmetauscheranordnung ein Gehäuse, wobei im Gehäuse ein Hauptströmungsweg gebildet ist, in dem ein Flüssigkeitswärmetauscher angeordnet ist. Der Flüssigkeitswärmetauscher weist in bekannter Weise einen Zulauf für die Kühlflüssigkeit auf sowie einen Ablauf für die durch die Abluft erwärmte Kühlflüssigkeit. Die Abkühlung der erwärmten Kühlflüssigkeit erfolgt bevorzugt außerhalb des Laborraums. Ferner ist im Hauptströmungsweg ein Luftförderer angeordnet, der den Luftstrom über den Flüssigkeitswärmetauscher führt. Zudem ist eine Überdruckklappe vorgesehen, die eine Öffnung des Hauptströmungswegs - in Strömungsrichtung - vor dem Wärmetauscher und vor dem Luftförderer bei Überdruck im Hauptströmungsweg ermöglicht. Über die Überdruckklappe wird ein Bypass zum Hauptströmungsweg gebildet, der ein Umgehen des Luftförderers und des Flüssigkeitswärmetauschers ermöglicht. Durch die Überdruckeinstellung kann auch bei Ausfall des Luftförderers gewährleistet werden, dass die Abluft des Geräts sicher in den Raum abgeleitet wird, wodurch eine dezentrale Verwendung unmittelbar am Gerät ermöglicht wird, da auch bei Ausfall des Luftförderers ein Hitzestau im Gerät zuverlässig vermieden werden kann und das Gerät so betrieben werden kann, wie es ohne eingeschaltete Wärmetauscheranordnung betrieben werden würde.

Zudem sind Befestigungsmittel zur Befestigung des Wärmetauschers am Gerätegehäuse vorgesehen. Die Befestigungsmittel und das Gehäuse sind derart gestaltet, dass jeweils einer Wärmetauscheranordnung jeweils einem Luftauslassbereich und / oder einem Lufteinlassbereich eines Laborgeräts zugeordnet ist.

Auf diese Weise sind die Wärmemengen, die jeder Wärmetauscher verarbeiten muss auch für den Fall, dass an einem Gerät mehrere Luftauslassbereiche vorgesehen sind, möglichst gering. Dadurch kann über den Flüssigkeitswärmetauscher mit einer möglichst kleinen Energiemenge gekühlt werden. So kann die Entstehung von Kondenswasser bei der Abkühlung möglichst verhindert werden.

Gemäß einer vorteilhaften Weiterbildung der Erfindung, kann eine Tropfwanne vorgesehen sein, die am Flüssigkeitswärmetauscher entstehendes Kondenswasser aufnehmen kann, wobei ferner ein Luftleitelement vorgesehen ist, das Luft vor dem Flüssigkeitswärmetauscher abzweigt und über die Tropfwanne leitet, so dass mögliche Feuchtigkeit in der Tropfwanne vom Luftstrom aufgenommen und wieder an die Raumluft abgegeben wird.

So kann eine dezentrale Kühlung der Geräteabluft in einem Raum geschaffen werden, die für bestehende Geräte nachrüstbar ist, und die auch in kritischen Umgebungen einsetzbar ist, da durch die vorangehend beschriebene Lösung die Luftfeuchtigkeit nicht beeinträchtigt wird.

Bevorzugt weist das Gehäuse Befestigungsmittel auf, mit welchen das Gehäuse ohne Werkzeug lösbar an einer Gerätewand befestigbar ist. Dadurch muss das Gesamtgerät unter Verwendung der Wärmetauscheranordnung nicht neu zertifiziert werden.

Gemäß einer besonders vorteilhaften Ausgestaltung sind die Befestigungsmittel wenigstens teilweise als Haken ausgebildet sind. Solche Haken können in, oft an Laborgeräten vorgesehenen, Revisionsöffnungen eingehängt werden.

Die Befestigungsmittel können auch Befestigungsmittel umfassen, die als Klettelemente ausgebildet sind. So kann die Wärmetauscheranordnung auf einfache Weise bedarfsgemäß montiert oder demontiert werden.

Das Luftleitelement ist bevorzugt aus einem Blech mit Durchbrüchen gebildet, wobei das Blech insbesondere schräg gegenüber dem Hauptströmungsweg angestellt ist, so dass eine verbesserte Aufteilung des Luftstroms erreicht werden kann. Die Tropfwanne kann bevorzugt so gestaltet sein, dass diese unter montierter Bedingung unter dem Flüssigkeitskühler liegt. Dadurch kann auf sehr einfache Weise gegebenenfalls vorliegendes Tropfwasser aufgefangen werden.

Die Tropfwanne kann in Richtung des Auslasses der Wärmetauscheranordnung ein Luftleitblech aufweisen, das insbesondere hinter dem Auslass endet, so dass der über die Tropfwanne geführte Luftstrom sich wieder mit dem Hauptluftstrom vereinigt.

Wärmetauscheranordnung nach einem der vorangehenden Ansprüche, dadurch gekennzeichnet, dass die Durchbrüche und der Hauptströmungsweg und der Luftförderer so aufeinander abgestimmt sind, dass über die Tropfwanne ein Volumenstrom gelenkt wird, der weniger als 20% des Volumenstroms des Hauptströmungwegs beträgt. Auf diese Weise kann eine Aufnahme von gegebenenfalls vorliegendem Kondenswasser in die Raumluft zuverlässig gewährleistet werden und eine möglichst große Abkühlung der Abluft gewährleistet werden.

Die Überdruckklappe ist bevorzugt so eingestellt, dass diese sich bei einem Druck, der dem Staudruck bei nicht betriebenem Luftförderer entspricht, öffnet. Dies gewährleistet eine zuverlässige Abfuhr der Abluft auch bei einem Geräteausfall über die Überdruckklappe.

Die Überdruckklappe ist insbesondere als eine um eine Achse drehbare Klappe ausgebildet, die in ihrer Anströmfläche und ihrem Gewicht so bemessen ist, dass eine selbsttätige Öffnung durch die anströmende Luft bei dem gewünschten Überdruck erfolgt, aber eine weitgehende Abdichtung im Betriebsfall gegeben ist.

Die Überdruckklappe liegt bevorzugt auf einem Luftauslassblech auf, das schräg gegenüber dem Hauptströmungsweg angeordnet ist, so dass unter Einfluss der Gewichtskraft die Überdruckklappe das Luftauslassblech abdeckt.

Insbesondere sind der Luftförderer und der Flüssigkeitswärmetauscher so angeordnet, dass der Flüssigkeitswärmetauscher saugseitig zum Luftförderer liegt. Dadurch kann eine kompakte Bauform in der Tiefe erreicht werden, wie sie für den Anbau an ein bestehendes Laborgerät von Vorteil ist, Ferner betrifft die Erfindung ein Kühlsystem umfassend wenigstens eine, insbesondere mehrere, zuvor beschriebene Wärmetauscheranordnung(en), eine Kühlereinheit zur Kühlung eines durch den Flüssigkeitswärmetauscher geführten Kühlfluids und einen Verbindungsstrang zur Verbindung des Flüssigkeitswärmetauschers mit der Kühlereinheit, wobei sich die wenigstens eine Wärmetauscheranordnung in einem Raum befindet, wobei die Kühlereinheit die Wärme der Abluft nach außerhalb des Raumes abführt und wobei insbesondere die Kühlereinheit außerhalb des Raums liegt.

Insbesondere umfasst der Verbindungsstrang wenigstens eine Flüssigkeitsleitung zur Leitung des Kühlfluids und wenigstens ein Anschlussterminal, das Anschlussstücke zur Verbindung mit dem Flüssigkeitswärmetauscher der Wärmetauscheranordnung aufweist. Dadurch kann an das wenigstens eine Anschlussterminal bedarfsgemäß ein Flüssigkeitswärmetauscher einer erfindungsgemäßen Wärmetauscheranordnung angeschlossen werden. Die Anschlussstücke weisen bevorzugt Rückschlagventile auf, so dass die Flüssigkeitswärmetauscher einfach an- und abgesteckt werden können, ohne den Betrieb zu beeinflussen. Bevorzugt sind die Anschlussstücke als hydraulische Schnellverschlüsse ausgebildet.

Der Verbindungsstrang kann ein ggfs. in einem Labor bereits vorhandener Kühlkreislauf sein, an den die Flüssigkeitswärmetauscher der Wärmetauscheranordnungen angeschlossen werden. Dadurch kann mit vorhandener Infrastruktur die Energieeffizienz in der Raumkühlung gegenüber einer konventionellen Kühlung erheblich gesteigert werden.

Weiter bevorzugt umfasst der Verbindungsstrang eine Zulaufleitung und eine Rücklaufleitung, wobei diese über das Anschlussterminal derart mit der Kühlereinheit verbunden sind, dass, wenn mehrere Wärmetauscheranordnungen an den Verbindungsstrang angeschlossen sind, mehrere Flüssigkeitswärmetauscher parallel geschaltet sind, wobei jeder Wärmetauscheranordnung ein Anschlussterminal zugeordnet ist. Dies hat den Vorteil, dass alle angeschlossenen Wärmetauscheranordnungen im Wesentlichen dieselbe Vorlauftemperatur haben.

Gemäß einer Weiterbildung der Erfindung ist eine Mehrzahl von Wärmetauscheranordnungen in einem Raum angeordnet und über Anschlussterminals mit der Kühlereinheit, die sich außerhalb des Raums mit den Wärmetauscheranordnungen befindet, verbunden. Ferner ist in dem Raum, in dem sich die Wärmetauscheranordnungen befinden, ein Temperatursensor angeordnet, der die Raumtemperatur misst und die erfasste Temperatur an die Steuereinheit für die Kühlereinheit übermittelt.

Bevorzugt kann neben dem Temperatursensor ein Feuchtesensor, insbesondere ein Hygrometer, vorgesehen sein.

Die Steuereinheit für die Kühlereinheit ist derart eingestellt, dass die Vorlauftemperatur einer Temperatur die größer oder gleich dem Taupunkt ist, eingestellt ist. Bei 60% Luftfeuchtigkeit ist die Vorlauftemperatur höchstens 8°C geringer als die Raumtemperatur von etwa 24°C. Auf diese Weise kann die Kühlleistung einer Mehrzahl von dezentralen Wärmetauscheranordnungen auf einfache Weise zentral eingestellt werden. Dadurch kann sichergestellt werden, dass die Geräteabluft nur so stark abgekühlt wird, dass möglichst kein Kondensat entsteht.

Die aus der Kühlereinheit gewonnene Wärmeenergie kann bevorzugt wärmerückgewinnend in einen Heizkreislauf eingespeist werden, bzw. anderweitig zur Energierückgewinnung genutzt werden.

Der Verbindungsstrang umfasst bevorzugt zudem ein Basisterminal, in dem der Temperatursensor aufgenommen ist, der über das Basisterminal mit einer Steuerung der Kühlereinheit verbunden ist.

Das Basisterminal kann auch einen Anschluss für den Eingang einer Stromversorgung aufweisen, mit dem die Anschlussterminals mit Strom versorgt werden können, um zentral die, insbesondere als elektrische Lüfter ausgebildeten, Luftförderer mit Energie zu versorgen.

Gemäß einer weiteren bevorzugten Ausgestaltung können die Anschlussterminals auch einen Stromanschluss zur Verbindung mit einem vorangehenden und/oder nachfolgenden Anschlussterminal oder Basisterminal aufweisen. Insbesondere weisen dann die Anschlussterminals elektrische Anschlüsse zur Verbindung mit dem Luftförderer, insbesondere den elektrischen Lüftern, auf.

Das Basisterminal kann Einstellmittel umfassen, um die Stromversorgung derart zu beeinflussen, dass die Luftförderleistung der angeschlossenen Luftförderer angepasst werden kann.

Auf diese Weise kann zentral auf einfache Weise die Luftfördermenge aller Wärmetauscheranordnungen angepasst und auf die Abluftbedingungen des Geräts und die Vorlauftemperatur des Kühlfluids angepasst werden.

Die Wärmetauscheranordnungen sind bevorzugt baugleich ausgebildet.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine perspektivische Rückansicht der Funktionskomponenten einer erfindungsgemäßen Wärmetauscheranordnung;
- Fig. 2: eine perspektivische Ansicht einer Überdruckklappe;
- Fig. 3a: schematische Schnittansicht einer erfindungsgemäßen Wärmetauscheranordnung im Betriebsfall;
- Fig. 3b: schematische Schnittansicht einer erfindungsgemäßen Wärmetauscheranordnung im Fehlerfall;
- Fig. 4: ein erfindungsgemäßes Kühlsystem; und
- Fig. 5: ein erfindungsgemäßes Anschlussterminal.

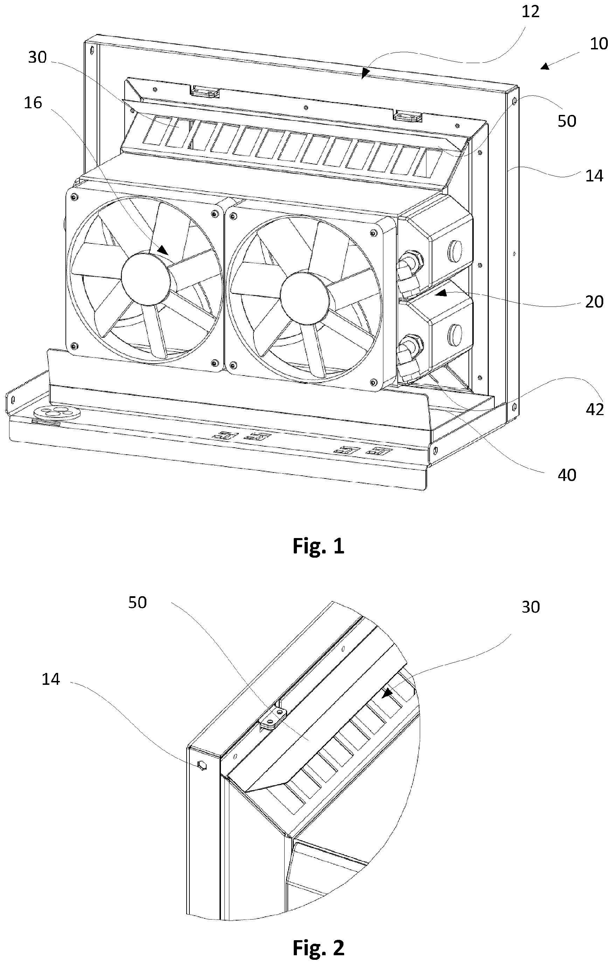

Fig. 1 zeigt eine perspektivische Rückansicht der Funktionskomponenten einer erfindungsgemäßen Wärmetauscheranordnung 10. Die Wärmetauscheranordnung 10 umfasst ein Gehäuse 12 mit einem Rahmen 14, der den Lufteinlass der Wärmetauscheranordnung 10 bildet. Über Befestigungsmittel, die in dieser Darstellung nicht gezeigt sind, ist die Wärmetauscheranordnung 10 an einem Gerät (nicht gezeigt), insbesondere einem Laborgerät, lösbar, insbesondere ohne Werkzeug lösbar, befestigbar. Bevorzugt umschließt der Rahmen 14 im angebauten Zustand eine Abluftöffnung des Laborgeräts.

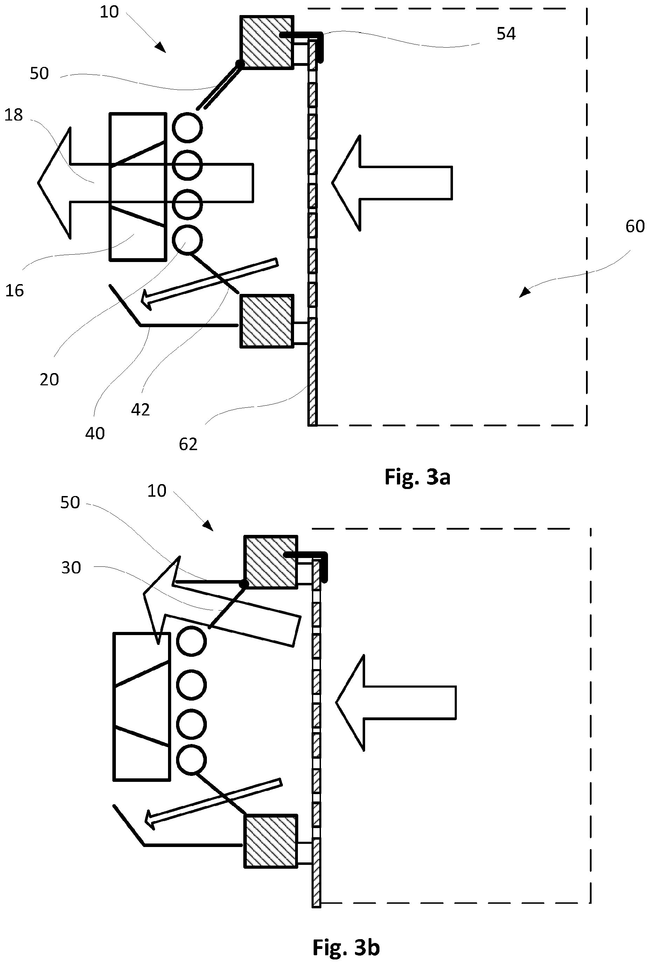

Die Luft durch den Rahmen 14 wird von einem Luftförderer 16, der im vorliegenden Fall durch zwei nebeneinander angeordnete Einzellüfter 16a, 16b gebildet wird, durch einen in Strömungsrichtung vor dem Luftförderer 16 liegenden Flüssigkeitswärmetauscher 20 gefördert. Der Flüssigkeitswärmetauscher 20 ist von einer Wandung umgeben, so dass ein Hauptströmungsweg 18 (vgl. Fig. 3a) der Luft durch den Flüssigkeitswärmetauscher 20 führt. Der Flüssigkeitswärmetauscher 20 weist einen Anschluss für den Zulauf und einen Anschluss für den Ablauf der Kühlflüssigkeit auf.

Vor dem Hauptströmungsweg 18 liegt ein Luftauslass 30, der im Betriebsfall von einer in Fig. 1 nicht gezeigten Überdruckklappe verschlossen ist. Die Überdruckklappe 50 wird in Fig. 2 näher beschrieben.

Unter dem Flüssigkeitswärmetauscher 20 ist eine Tropfwanne 40 angeordnet, in der sich gegebenenfalls bei der Abkühlung bildendes Kondensat aufgefangen werden kann. Vor dem Hauptströmungsweg 18 ist ein weiteres Luftleitelement 42 vorgesehen, der einen Teil der Abluft abzweigt und über die Tropfwanne 40 leitet. Das Luftleitelement 42 ist durch ein schräg zum Hauptströmungsweg 18 liegendes Schlitzblech gebildet. So wird warme Abluft abgezweigt, um gegebenenfalls in der Tropfwanne 40 aufgenommenes Kondensat in die Raumluft abzugeben, so dass bei der Kühlung keine nachhaltige Feuchtigkeit entsteht.

Fig. 2 zeigt eine perspektivische Ansicht einer Überdruckklappe 50 im geöffneten Zustand, die im geschlossenen Zustand auf dem Luftauslass 30 aufliegt und diesen abdichtet. Die Überdrucklappe 50 ist im einfachsten Fall aus einer Kunststoffplatte/Folie mit einem Festkörpergelenk gebildet. Dadurch ist eine ausreichende Empfindlichkeit für eine Öffnung im Störungsfall gegeben.

Fig. 3a zeigt eine schematische Schnittansicht einer erfindungsgemäßen Wärmetauscheranordnung 10, die an einem lediglich schematisch dargestellten Laborgerät 60 angeschlossen ist. Das Laborgerät 60 umfasst ein Lochblech 62 mit einem Luftauslassbereich, durch welchen warme Abluft aus dem Laborgerät herausgeblasen wird.

Die Wärmetauscheranordnung 10 weist zur Anbringung Befestigungsmittel in Form von Haken 54 auf, die in Revisions- oder Grifföffnungen des Lochblechs 62 einhängbar sind. Dadurch kann die Wärmetauscheranordnung 10 auf einfache Weise dem Laborgerät 60 bedarfsgemäß nachgeschaltet werden.

In der Darstellung der Fig. 3a ist die Wärmetauscheranordnung 10 in einer Betriebsstellung gezeigt, die Aufteilung des Abluftstroms aus dem Laborgerät 60 erfolgt bei geschlossener Überdruckklappe 50 zum Großteil über den Hauptströmungsweg 18, in dem die Luft durch den Flüssigkeitswärmetauscher 20 abgekühlt wird und so mit einer Raumtemperatur nahe der Raumtemperatur in den Raum abgegeben werden kann. Zur Wiederaufnahme der gegebenenfalls anfallenden Feuchtigkeit aufgrund von Kondensation am Wärmetauscher wird ein Teil der Abluft über das Luftleitelement 42 vor dem Hauptströmungsweg 18 abgezweigt. Das Luftleitelement 42 kann so gestaltet sein, dass der Öffnungsquerschnitt fest oder einstellbar ist.

Fig. 3b zeigt eine schematische Schnittansicht einer erfindungsgemäßen Wärmetauscheranordnung 10 im Fehlerfall, nämlich wenn der Luftförderer 16 ausfällt. Um die Betriebssicherheit zu gewährleisten, strömt dann die Abluft des Laborgeräts 60 weitgehend ungehindert durch den Luftauslass 30 aus der Wärmetauscheranordnung aus, wobei die Überdruckklappe 50 nur durch den Luftstrom geöffnet wird. Auf diese Weise ist keine Steuerung der Überdruckklappe 50 notwendig und es ist immer gewährleistet, dass so auch im Fehlerfall immer eine Abfuhr der warmen Geräteabluft sichergestellt ist.

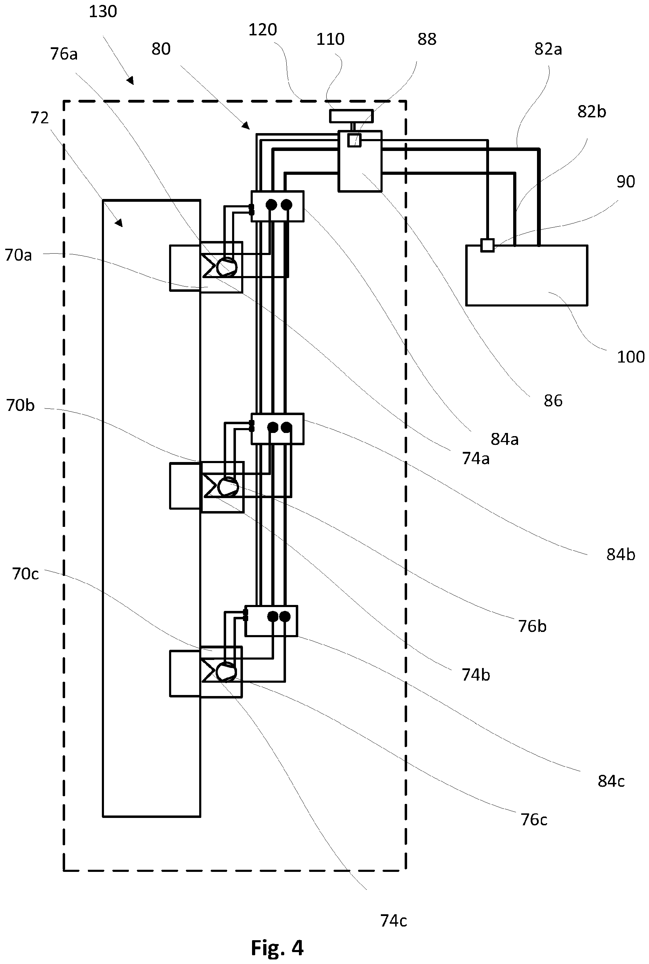

Fig. 4 zeigt ein erfindungsgemäßes Kühlsystem 130 umfassend drei erfindungsgemäße Wärmetauscheranordnungen 70a, 70b, 70c, die an drei Abluftauslässen eines Laborgeräts 72 ohne Werkzeug lösbar aufgehängt sind. Die Wärmetauscheranordnungen 70a, 70b, 70c umfassen jeweils einen Flüssigkeitswärmetauscher 74a, 74b, 74c, der jeweils mit einer Kühlereinheit 100, die außerhalb des Raums 120 angeordnet ist, über einen Verbindungsstrang 80 verbunden ist. Der Verbindungsstrang 80 umfasst zwei Schlauchleitungen 82a, 82b, in welche Anschlussterminals 84a, 84b, 84c eingesetzt sind, die einen fluidischen Anschluss der Flüssigkeitswärmetauscher 74a, 74b, 74c an die Kühlereinheit 100 ermöglichen. Ferner ist ein Basisterminal 86 vorgesehen, das einen Temperatursensor 88 zur Aufnahme der Raumtemperatur aufweist. Der Temperatursensor 88 ist mit einer Steuereinheit 90 der Kühlereinheit 100 verbunden. Die Steuereinheit 90 ist derart ausgebildet, dass die Vorlauftemperatur des Kühlfluids um 8°C geringer als die Raumtemperatur ist.

Das Basisterminal 86 ist zudem an eine Stromversorgung 110 angeschlossen, die über das Basisterminal 86 an die Anschlussterminals 84a, 84b, 84c verteilt wird. Die Anschlussterminals 84a, 84b, 84c weisen Stromanschlüsse auf, über die die elektrischen Lüfter 76a, 76b, 76c mit der Stromversorgung 110 verbunden werden können. Alternativ kann die Stromversorgung auch Teil der Kühlereinheit sein, wodurch anhand der Stromversorgung der Lüfter dezentral überprüft werden kann, ob die Kühlereinheit in Betrieb ist. Dies kann bevorzugt über wenigstens einer LED, die bevorzugt im Basisterminal 86 integriert ist, überprüft werden.

Auf diese einfache Weise kann über ein Basisterminal 86 im Anschlussstrang 80 und der Kühlereinheit 100 das Verhalten der dezentralen Wärmetauscheranordnungen 70a, 70b, 70c eingestellt werden, die dann für die nötige Abkühlung der Geräteabluft des Laborgeräts 72 sorgen.

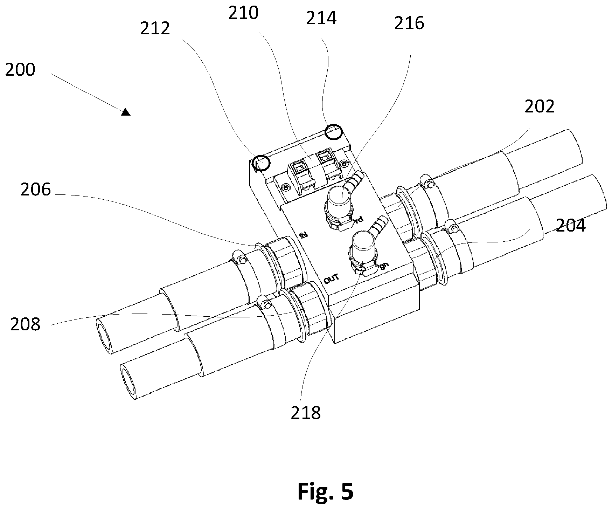

Fig. 5 zeigt exemplarisch ein erfindungsgemäßes Anschlussterminal 200. Das Anschlussterminal 200 weist einen Fluidanschlus 202 für den Anschluss der kühlereinheitsseitigen Vorlaufleitung und einen Anschluss 206 zur Weiterverbindung der Vorlaufleitung zu einem weiteren Anschlussterminal auf. Zwischen dem Anschluss 202 und dem Anschluss 206 zweigt ein Anschlussstück 216 in Form eines Schnellverschlusses zur Verbindung mit dem Flüssigkeitskühler ab. Analog dazu ist eine Rücklaufseite mit den Anschlüssen 204, 208 und dem Anschlussstück 218 ausgebildet. Darüber hinaus weist das Terminal 200 einen Stromversorgungseingang 214, einen Stromversorgungsausgang 212 und eine Anschlussklemme 210 auf, wobei über die Anschlussklemme 210 der elektrische Lüfter betrieben werden kann. An ein solches Anschlussterminal 200 kann jeweils eine Wärmetauscheranordnung angeschlossen werden. Die Anschlussterminals 200 können so flexibel in einem Raum in einem Verbindungsstrang verlegt werden, wobei nach Bedarf an die jeweiligen Anschlussterminals 200 eine Wärmetauscheranordnung 70a, 70b, 70c angeschlossen werden kann. Solche Anschlussterminals 200 können nach Bedarf in einen bestehenden Verbindungsstrang eingefügt werden.

### Bezugszeichenliste

- 10: Wärmetauscheranordnung
- 12: Gehäuse
- 14: Rahmen
- 16: Luftförderer
- 18: Hauptströmungsweg
- 20: Flüssigkeitswärmetauscher
- 30: Luftauslass
- 40: Tropfwanne
- 42: Luftleitelement
- 50: Überdruckklappe
- 54: Haken
- 60: Laborgerät
- 62: Lochblech
- 70a,b,c: Wärmetauscheranordnungen
- 72: Laborgerät
- 74a,b,c: Flüssigkeitswärmetauscher
- 76a,b,c: Elektrischer Lüfter
- 80: Verbindungsstrang
- 82a,b: Schlauchleitung
- 84a,b,c: Anschlussterminals
- 86: Basisterminal
- 88: Temperatursensor
- 90: Steuereinheit
- 100: Kühlereinheit
- 110: Stromversorgung
- 120: Raum
- 130: Kühlsystem
- 200: Anschlussterminal
- 202: Fluidanschlus
- 204: Anschluss
- 206: Anschluss
- 208: Anschluss
- 210: Anschlussklemme
- 212: Stromversorgungsausgang
- 214: Stromversorgungseingang
- 216: Anschlussstück

## Patentansprüche

1. Wärmetauscheranordnung (10) zur Befestigung an einer Gerätewand, umfassend ein Gehäuse (12), wobei im Gehäuse ein Hauptströmungsweg (18) gebildet ist, in dem ein Flüssigkeitswärmetauscher (20) angeordnet ist, wobei ferner im Hauptströmungsweg (18) ein Luftförderer (16) angeordnet ist, der den Luftstrom über den Flüssigkeitswärmetauscher (20; 74a, 74b, 74c) führt, **dadurch gekennzeichnet, dass** eine Überdruckklappe (50) vorgesehen ist, die eine Öffnung vor dem Flüssigkeitswärmetauscher (20; 74a, 74b, 74c) und vor dem Luftförderer (16) bei Überdruck ermöglicht und damit einen Bypass zum Hauptströmungsweg (18) bildet.

2. Wärmetauscheranordnung nach Anspruch 1, **dadurch gekennzeichnet, dass** eine Tropfwanne (40) vorgesehen ist, die am Flüssigkeitswärmetauscher (20; 74a, 74b, 74c) entstehendes Kondenswasser aufnehmen kann, wobei ferner ein Luftleitelement (42) vorgesehen ist, so dass Luft vor dem Flüssigkeitswärmetauscher (20; 74a, 74b, 74c) abgezweigt und über die Tropfwanne (40) geleitet wird, so dass mögliche Feuchtigkeit in der Tropfwanne (40) vom Luftstrom aufgenommen wird.

3. Wärmetauscheranordnung nach Anspruch 1 oder 2, **dadurch gekennzeichnet, dass** das Gehäuse (12) Befestigungsmittel (54) aufweist, mit welchen das Gehäuse (12) ohne Werkzeug lösbar an einer Gerätewand befestigbar ist.

4. Wärmetauscheranordnung nach Anspruch 3, **dadurch gekennzeichnet, dass** die Befestigungsmittel Haken (54) umfassen.

5. Wärmetauscheranordnung nach Anspruch 3 oder 4, **dadurch gekennzeichnet, dass** die Befestigungsmittel Klettelemente umfassen.

6. Wärmetauscheranordnung nach Anspruch 2, insbesondere und einem der weiteren Ansprüche 3 bis 5, **dadurch gekennzeichnet, dass** das Luftleitelement (42) ein Blech mit Durchbrüchen ist.

7. Wärmetauscheranordnung nach Anspruch 6, **dadurch gekennzeichnet, dass** die Durchbrüche und der Hauptströmungsweg (18) und der Luftförderer (16) so aufeinander abgestimmt sind, dass über die Tropfwanne (40) ein Volumenstrom gelenkt wird, der weniger als 20% des Volumenstroms des Hauptströmungswegs (18) ist.

8. Wärmetauscheranordnung nach einem der vorangehenden Ansprüche, **dadurch gekennzeichnet, dass** sich die Überdruckklappe (50) bei einem Druck, der dem Staudruck bei nicht betriebenem Luftförderer (16) entspricht, öffnet.

9. Wärmetauscheranordnung nach einem der vorangehenden Ansprüche, **dadurch gekennzeichnet, dass** der Luftförderer (16) und der Flüssigkeitswärmetauscher (20) so angeordnet sind, dass der Flüssigkeitswärmetauscher (20; 74a, 74b, 74c) saugseitig zum Luftförderer (16) liegt.

10. Kühlsystem (130) umfassend eine Wärmetauscheranordnung nach einem der vorangehenden Ansprüche, eine Kühlereinheit (100) zur Kühlung des durch den Flüssigkeitswärmetauscher (74a, 74b, 74c) geführten Kühlfluids und einen Verbindungsstrang (80) zur Verbindung des Flüssigkeitswärmetauscher (74a, 74b, 74c) mit der Kühlereinheit (100).

11. Kühlsystem (130) nach Anspruch 10, **dadurch gekennzeichnet, dass** der Verbindungsstrang (80) wenigstens eine Flüssigkeitsleitung (82a, 82b) zur Leitung des Kühlfluids umfasst, wobei Anschlussterminals (84a, 84b, 84c), die Anschlussstücke zur Verbindung mit dem Flüssigkeitswärmetauscher (74a, 74b, 74c) der Wärmetauscheranordnung (10) aufweisen, mit der Flüssigkeitsleitung (82a, 82b) verbunden sind.

12. Kühlsystem (130) nach Anspruch 11, **dadurch gekennzeichnet, dass** der Verbindungsstrang (80) eine Zulaufleitung (82a) und eine Rücklaufleitung (82b) umfasst, die mit der Kühlereinheit (100) verbunden sind, wobei die Anschlussterminals (84a, 84b, 84c) derart ausgebildet sind, dass mehrere Flüssigkeitswärmetauscher (74a, 74b, 74c) parallel geschaltet sind, wobei jeder Wärmetauscheranordnung (70a, 70b, 70c) ein Anschlussterminal (84a, 84b, 84c) zugeordnet ist.

13. Kühlsystem (130) nach Anspruch 12, **dadurch gekennzeichnet, dass** eine Mehrzahl von Wärmetauscheranordnungen (70a, 70b, 70c) in einem Raum (120) angeordnet ist und über Anschlussterminals (202, 204, 206, 208) mit der Kühlereinheit, die die Wärme der Abluft außerhalb des Raumes abführt, die sich insbesondere außerhalb des Raums (120) mit der Wärmetauscheranordnungen (70a, 70b, 70c) befindet, verbunden ist, wobei in dem Raum ein Temperatursensor (88) angeordnet ist, der die Raumtemperatur misst und an die Steuereinheit (90) für die Kühlereinheit (100) übermittelt.

14. Kühlsystem (130) nach Anspruch 13, **dadurch gekennzeichnet, dass** in dem Raum (120) ein Feuchtesensor vorgesehen ist.

15. Kühlsystem (130) nach Anspruch 13 oder 14, **dadurch gekennzeichnet, dass** der Verbindungsstrang (80) ein Basisterminal (86) umfasst, in dem der Temperatursensor (88) und / oder Feuchtesensor aufgenommen ist, der über das Basisterminal (86) mit einer Steuerung (90) der Kühlereinheit (100) verbunden ist.

16. Kühlsystem (130) nach Anspruch 15, **dadurch gekennzeichnet, dass** das Basisterminal (86) einen Anschluss für den Eingang einer Stromversorgung (110) aufweist.

17. Kühlsystem (130) nach Anspruch 16, **dadurch gekennzeichnet, dass** das Anschlussterminal (200) einen Stromanschluss (212, 214) zur Verbindung mit einem vorangehenden und/oder nachfolgenden Anschlussterminal (200) oder Basisterminal (86) aufweist.

18. Kühlsystem (130) nach Anspruch 17, **dadurch gekennzeichnet, dass** das Anschlussterminal (200) elektrische Anschlüsse (210) zur Verbindung mit dem Luftförderer (16, 76a, 76b, 76c) aufweist.

## Claims

1. Heat exchanger assembly (10) for attachment to a device wall, comprising a housing (12) which has a main flow path (18) formed therein, in which a liquid heat exchanger (20) is disposed, with an air conveyor (16) being furthermore provided in said main flow path (18), which air conveyor (16) directs the air flow through the liquid heat exchanger (20; 74a, 74b, 74c), **characterized in that** a pressure relief flap (50) is provided which allows for an opening upstream of the liquid heat exchanger (20; 74a, 74b, 74c) and upstream of the air conveyor (16) in the event of overpressure, thus forming a bypass to the main flow path (18).

2. Heat exchanger assembly according to claim 1, **characterized in that** a drip tray (40) is provided which is adapted to receive condensed water produced at the liquid heat exchanger (20; 74a, 74b, 74c), with an air guide element (42) being furthermore provided so as to branch off air upstream of the liquid heat exchanger (20; 74a, 74b, 74c) and direct it over the drip tray (40) such that any moisture in the drip tray (40) will be absorbed by the air flow.

3. Heat exchanger assembly according to claim 1 or 2, **characterized in that** the housing (12) has fastening means (54) which can be used to detachably fasten the housing (12) to a device wall without the use of tools.

4. Heat exchanger assembly according to claim 3, **characterized in that** said fastening means comprise hooks (54).

5. Heat exchanger assembly according to any one of claims 3 or 4 above, **characterized in that** said fastening means comprise Velcro elements.

6. Heat exchanger assembly according to claim 2, in particular, and any one of subsequent claims 3 to 5, **characterized in that** said air guide element (42) is a sheet with holes made therein.

7. Heat exchanger assembly according to claim 6, **characterized in that** said holes and said main flow path (18) and said air conveyor (16) are coordinated in such a manner that a volume flow will be directed over the drip tray (40) that is less than 20% of the volume flow of the main flow path (18).

8. Heat exchanger assembly according to any one of the preceding claims, **characterized in that** said pressure relief flap (50) will open at a pressure corresponding to the dynamic pressure prevailing when the air conveyor (16) is not in operation.

9. Heat exchanger assembly according to any one of the preceding claims, **characterized in that** said air conveyor (16) and said liquid heat exchanger (20) are arranged such that said liquid heat exchanger (20; 74a, 74b, 74c) is disposed on the intake side of the air conveyor (16).

10. Cooling system (130) comprising a heat exchanger assembly according to any one of the preceding claims, a cooling unit (100) for cooling the fluid passing through the liquid heat exchanger (74a, 74b, 74c), and a connecting strand (80) for connecting the liquid heat exchanger (74a, 74b, 74c) to the cooling unit (100).

11. Cooling system (130) according to claim 10, **characterized in that** said connecting strand (80) comprises at least one fluid line (82a, 82b) for conducting said cooling fluid, wherein connection terminals (84a, 84b, 84c) having fittings for connection to said liquid heat exchanger (74a, 74b, 74c) of said heat exchanger assembly (10) are connected to said fluid line (82a, 82b).

12. Cooling system (130) according to claim 11, **characterized in that** said connecting strand (80) comprises a supply line (82a) and a return line (82b) which are connected to the cooling unit (100), with said connection terminals (84a, 84b, 84c) being designed in such a way that a plurality of liquid heat exchangers (74a, 74b, 74c) are connected in parallel, with each heat exchanger assembly (70a, 70b, 70c) being assigned a connection terminal (84a, 84b, 84c).

13. Cooling system (130) according to claim 12, **characterized in that** a plurality of heat exchanger assemblies (70a, 70b, 70c) are arranged in a room (120) and are connected via connection terminals (202, 204, 206, 208) to the cooling unit which dissipates the heat of the exhaust air outside the room, which cooling unit is located in particular outside the room (120) containing the heat exchanger assemblies (70a, 70b, 70c), with a temperature sensor (88) being arranged in the room, which temperature sensor (88) measures the room temperature and transmits it to the control unit (90) for the cooling unit (100).

14. Cooling system (130) according to claim 13, **characterized in that** a moisture sensor is provided in the room (120).

15. Cooling system (130) according to one of claims 13 and 14 above, **characterized in that** said connecting strand (80) comprises a base terminal (86) within which said temperature sensor (88) and/or humidity sensor are accommodated, which sensor is connected to a controller (90) of the cooling unit (100) via the base terminal (86).

16. Cooling system (130) according to claim 15, **characterized in that** said base terminal (86) includes a connector for the input of a power supply (110).

17. Cooling system (130) according to claim 16, **characterized in that** said connection terminal (200) comprises a power connector (212, 214) for connection to a preceding and/or subsequent connection terminal (200) or base terminal (86).

18. Cooling system according to claim 17, **characterized in that** said connection terminal (200) has electrical connectors (210) for connection to said air conveyor (16, 76a, 76b, 76c).

## Revendications

1. Ensemble d'échangeur de chaleur (10) à fixer sur une paroi d'appareil, comprenant un carter (12), un chemin d'écoulement principal (18), dans lequel est disposé un échangeur de chaleur à liquide (20), étant formé dans le carter, un transporteur d'air (16), qui guide le flux d'air sur toute l'étendue de l'échangeur de chaleur à liquide (20 ; 74a, 74b, 74c), étant disposé en outre dans le chemin d'écoulement principal (18), **caractérisé en ce qu'**il est prévu un clapet de surpression (50), qui permet une ouverture devant l'échangeur de chaleur à liquide (20 ; 74a, 74b, 74c) et devant le transporteur d'air (16) lors d'une surpression et forme ainsi une dérivation vers le chemin d'écoulement principal (18).

2. Ensemble d'échangeur de chaleur selon la revendication 1, **caractérisé en ce qu'**une cuve d'égouttement (40) est prévue, qui peut recevoir l'eau de condensation produite sur l'échangeur de chaleur à liquide (20 ; 74a, 74b, 74c), un élément de conduite d'air (42) étant en outre prévu, de sorte que l'air est dévié devant l'échangeur de chaleur à liquide (20 ; 74a, 74b, 74c) et est conduit au-dessus de la cuve d'égouttement (40), de sorte que l'humidité éventuelle dans la cuve d'égouttement (40) est reçue par le flux d'air.

3. Ensemble d'échangeur de chaleur selon la revendication 1 ou 2, **caractérisé en ce que** le carter (12) présente des moyens de fixation (54), avec lesquels le carter (12) peut être fixé sans outil de manière détachable sur une paroi d'appareil.

4. Ensemble d'échangeur de chaleur selon la revendication 3, **caractérisé en ce que** les moyens de fixation comprennent des crochets (54).

5. Ensemble d'échangeur de chaleur selon la revendication 3 ou 4, **caractérisé en ce que** les moyens de fixation comprennent des éléments auto-agrippants.

6. Ensemble d'échangeur de chaleur selon la revendication 2, en particulier et l'une des autres revendications 3 à 5, **caractérisé en ce que** l'élément de conduite d'air (42) est une tôle avec des passages.

7. Ensemble d'échangeur de chaleur selon la revendication 6, **caractérisé en ce que** les passages et le chemin d'écoulement principal (18) et le transporteur d'air (16) sont adaptés les uns aux autres de sorte qu'un débit volumétrique, qui est inférieur de 20 % au débit volumétrique du chemin d'écoulement principal (18), est dirigé au-dessus de la cuve d'égouttement (40).

8. Ensemble d'échangeur de chaleur selon l'une quelconque des revendications précédentes, **caractérisé en ce que** le clapet de surpression (50) s'ouvre à une pression qui correspond à la pression dynamique lorsque le transporteur d'air (16) ne fonctionne pas.

9. Ensemble d'échangeur de chaleur selon l'une quelconque des revendications précédentes, **caractérisé en ce que** le transporteur d'air (16) et l'échangeur de chaleur à liquide (20) sont disposés de sorte que l'échangeur de chaleur à liquide (20 ; 74a, 74b, 74c) se situe côté aspiration par rapport au transporteur d'air (16).

10. Système de refroidissement (130) comprenant un ensemble d'échangeur de chaleur selon l'une quelconque des revendications précédentes, une unité de refroidissement (100) pour le refroidissement du fluide de refroidissement guidé à travers l'échangeur de chaleur à liquide (74a, 74b, 74c) et une ligne de liaison (80) pour la liaison de l'échangeur de chaleur à liquide (74a, 74b, 74c) à l'unité de refroidissement (100).

11. Système de refroidissement (130) selon la revendication 10, **caractérisé en ce que** la ligne de liaison (80) comprend au moins une conduite de liquide (82a, 82b) pour la conduite du fluide de refroidissement, des bornes de raccordement (84a, 84b, 84c), qui présentent des pièces de raccordement pour la liaison à l'échangeur de chaleur à liquide (74a, 74b, 74c) de l'ensemble d'échangeur de chaleur (10), étant reliées à la conduite de liquide (82a, 82b).

12. Système de refroidissement (130) selon la revendication 11, **caractérisé en ce que** le câble de liaison (80) comprend une conduite d'arrivée (82a) et une conduite de retour (82b), qui sont reliées à l'unité de refroidissement (100), les bornes de raccordement (84a, 84b, 84c) étant réalisées de telle sorte que plusieurs échangeurs de chaleur à liquide (74a, 74b, 74c) sont montés en parallèle, une borne de raccordement (84a, 84b, 84c) étant associée à chaque ensemble d'échangeur de chaleur (70a, 70b, 70c).

13. Système de refroidissement (130) selon la revendication 12, **caractérisé en ce qu'**une pluralité d'ensembles d'échangeur de chaleur (70a, 70b, 70c) est disposée dans une chambre (120) et est reliée par l'intermédiaire de bornes de raccordement (202, 204, 206, 208) à l'unité de refroidissement, qui évacue la chaleur de l'air vicié à l'extérieur de la chambre, qui se trouve en particulier à l'extérieur de la chambre (120) avec les ensembles d'échangeur de chaleur (70a, 70b, 70c), un capteur de température (88), qui mesure la température de la chambre et la transmet à l'unité de commande (90) pour l'unité de refroidissement (100), étant disposé dans la chambre.

14. Système de refroidissement (130) selon la revendication 13, **caractérisé en ce qu'**un capteur d'humidité est prévu dans la chambre (120).

15. Système de refroidissement (130) selon la revendication 13 ou 14, **caractérisé en ce que** le câble de liaison (80) comprend une borne de base (86), dans laquelle le capteur de température (88) et/ou capteur d'humidité est logé, qui est relié à une commande (90) de l'unité de refroidissement (100) par l'intermédiaire de la borne de base (86).

16. Système de refroidissement (130) selon la revendication 15, **caractérisé en ce que** la borne de base (86) présente un raccordement pour l'entrée d'une alimentation en courant (110).

17. Système de refroidissement (130) selon la revendication 16, **caractérisé en ce que** la borne de raccordement (200) présente un raccordement au courant (212, 214) pour la liaison à une borne de raccordement (200) ou borne de base (86) précédente et/ou suivante.

18. Système de refroidissement (130) selon la revendication 17, **caractérisé en ce que** la borne de raccordement (200) présente des raccordements électriques (210) pour la liaison au transporteur d'air (16, 76a, 76b, 76c).
